# EUROPEAN PATENT APPLICATION

(11) **EP 0 949 293 A2**
(43) Date of publication of application: **13.10.1999**
(21) Application number: 99106953.5
(22) Date of filing: 08.04.1999
(51) Int. Cl.: C08J 11/08

(54) **A method for processing thermoplastic resin compositions containing flame retardants**

(30) Priority: 09.04.1998 JP 9725298; 29.10.1998 JP 30817998
(71) Applicant: Matsushita Electric Industrial Co., Ltd., Kadoma-shi, Osaka 571-8501 (JP)
(72) Inventor: Shiino, Toru, Moriguchi-shi, Osaka 570-0041 (JP); Ueno, Takayoshi, Hirakata-shi, Osaka 573-1146 (JP); Onishi, Hiroshi, Hirakata-shi, Osaka 573-1125 (JP); Nakajima, Keizo, Kawachinagano-shi, Osaka 586-0077 (JP)
(74) Representative: Grünecker, Kinkeldey, Stockmair & Schwanhäusser Anwaltssozietät

(57) **Abstract**

A method for processing thermoplastic resin compositions containing flame retardants has a resin dissolution step to disperse the thermoplastic resin composition containing flame retardants in a solvent and dissolve at least a part of the thermoplastic resin composition, a flame retardant removing step to remove at least a part of the flame retardants from the solution in which the resin has been dissolved, and a resin removing step to remove at least a part of the thermoplastic resin from the solution from which the flame retardants have been removed.

## Description

### BACKGROUND OF THE INVENTION

### Field of the Invention

The present invention relates to a method for processing to separate flame retardants and thermoplastic resin from thermoplastic resin compositions containing flame retardants employed, for example, for the bodies of monitors for televisions, computers, and the like.

### Description of the Prior Art

Presently, as bodies of monitors for televisions and computers, videos, and the like, thermoplastic resins such as styrene resins, ABS (acrylonitrile-butadiene-styrene) resins, and high-impact polystyrene resins with improved impact resistance (blends of polybutadiene and polystyrene, blends of copolymers of the respective monomers, etc.) are generally employed. However, thermoplastic resins have such a problem that they are flammable when employed alone. From a viewpoint of the prevention of flame spread at the time of fire disaster, resin compositions that have been made flame retardant by compounding flame retarders such as flame retardants and flame retardant adjuvants are widely employed. Halogenated flame retardants are employed globally due to a higher flame retardant effect as compared to various plastic resins and low price.

Halogen-based flame retardants, especially bromine-based flame retardants, have an excellent flame retardant effect on aromatic resins represented by styrene resins and have been employed in a great quantity for various body and part materials of home electric appliances. Therefore, a great quantity of resin compositions containing bromine-based flame retardants is discarded accompanying disposal of these electric appliances.

Resin wastes are generally processed mainly by incineration and reclamation, and only a part is recycled by heat melting, etc.

It is difficult, however, to incinerate flame retardant resin compositions due to their high flame retardance imparted and thus to process these compositions.

With increased awareness of environmental problems, harmfulness of halogenated organic substances to the environment has been pointed out and the use of halogenated organic substances has been restricted. Presently, manufacturers using halogen-based flame retardants are considering conversion from halogen-based flame retardants to flame retardants not containing halogenated organic compounds such as phosphorus-based flame retardants. Phosphorus-based compounds provide a weaker flame retardant effect than halogenated organic compounds, however. Thus, conversion from halogenated organic compounds is making very slow progress.

Recently, recycling of resources has also been required, and especially, recycling of plastic materials has been a global problem. Thus, establishment of methods for processing and recycling resin wastes has been an important problem. Processing and recycling of resin compositions containing flame retardants have scarcely been tackled and become a great problem.

### SUMMARY OF THE INVENTION

The present invention has been proposed considering such circumstance. It is an object of the present invention to provide a method for processing to separate flame retardants and thermoplastic resin from thermoplastic resin compositions containing flame retardants efficiently.

The 1st invention of the present invention is a method for processing thermoplastic resin compositions containing flame retardants comprising: a resin dissolution step to disperse the thermoplastic resin composition containing flame retardants in a solvent and dissolve at least a part of the thermoplastic resin composition; a flame retardant removing step to remove at least a part of the flame retardants from the solution in which the resin has been dissolved; and a resin removing step to remove at least a part of the thermoplastic resin from the solution from which the flame retardants have been removed.

The 2nd invention of the present invention is a method for processing thermoplastic resin compositions containing flame retardants comprising: a resin dissolution step to disperse the thermoplastic resin composition containing flame retardants in a solvent and dissolve at least a part of the thermoplastic resin composition; a resin removing step to remove at least a part of the thermoplastic resin composition from the solution in which the resin has been dissolved; and a flame retardant removing step to remove at least a part of the flame retardants from the solution from which the resin has been removed.

The 3rd invention of the present invention is the method for processing thermoplastic resin composition containing flame retardants according to said 1st or 2nd invention, wherein the resin removing step comprises a step of distillation under reduced pressure.

The 4th invention of the present invention is the method for processing thermoplastic resin composition containing flame retardants according to said 1st or 2nd invention, wherein the resin removing step comprises a step of adding water or lower alcohols.

The 5th invention of the present invention is the method for processing thermoplastic resin composition containing flame retardants according to any one of said 1st to 4th inventions, wherein said flame retardants are bromine-based flame retardants.

The 6th invention of the present invention is the method for processing thermoplastic resin composition containing flame retardants according to any one of said 1st to 5th inventions wherein said thermoplastic resins are styrene polymers.

The 7th invention of the present invention is the method for processing thermoplastic resin composition containing flame retardants according to any one of said 1st to 6th inventions wherein said solvents are represented by the chemical formula 1: 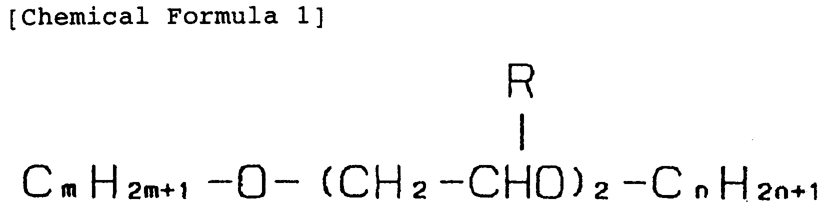 wherein, R is hydrogen or methyl group, m is an integer of 1 or more and 4 or less, and n is an integer of 0 or more and 4 or less; or the chemical formula 2:

R₁OOC- (CH₂)ₙ -COOR₂ [Chemical Formula 2]

wherein, R₁ and R₂ are alkyl groups having 1 or more and 3 or less carbon atoms, and n is an integer of 0 or more and 4 or less.

The 8th invention of the present invention is the method for processing thermoplastic resin composition containing flame retardants according to any one of said 1st to 6th inventions wherein said solvents contain at least one selected from a group consisting of d-limonen, l-limonen, and dipentene.

### DETAILED DESCRIPTION OF THE PREFERRED EMBODIMENTS

The present invention relates to a method comprising the steps of immersing a thermoplastic resin composition containing flame retardants in a solution in which at least a part of the thermoplastic resin is dissolved and finally separating at least a part of the thermoplastic resin from the flame retardant.

The thermoplastic resin compositions as described herein are those containing at least flame retardants and/or flame retardant adjuvants to impart flame retardance to thermoplastic resin and additives such as stabilisers and colorants that are mixed according to the applications of the resin compositions and thus refer to resin compositions formed by mixing resin with various additives.

As flame retardants, phenyl oxide-based flame retardants such as decabromodiphenyl oxide, octabromodiphenyl oxide, and tetrabromodiphenyl oxide; bisphenol A flame retardants such as tetrabromobisphenol A (TBA); bromine-based flame retardants such as hexabromocyclododecane, bistribromophenoxyethane, tribromophenol, ethylene bistetrabromophtalimido, TBA polycarbonate oligomer, brominated polystyrene, and TBA epoxy oligomers; chlorine-based flame retardants such as chlorinated paraffin, perchlorocyclopentadecane, and chlorendic acid; phosphorus-based flame retardants; flame retardants-based nitrogen compounds; and inorganic flame retardants are known.

The flame retardants contained in thermoplastic resin compositions may a single type or a mixture of a plurality of types and any contents may be applicable for the flame retardants.

The effect of the present invention is remarkable, when bromine-based flame retardants are employed among these flame retardants.

Any thermoplastic resins can be employed and the present invention is effective especially for styrene polymers. As styrene polymers, polystyrene, poly-α-methylstyrene, and polymers comprising styrene-butadiene, styrene-acrylonitrile, styrene-butadiene-acrylonitrile, and styrene-maleic anhydride can be mentioned.

The above styrene polymers may be employed alone or as a mixture. Mixtures with other polymers can be employed.

Although the styrene polymers may have any molecular weights, those with a molecular weight of around 200-1,000,000 are preferable.

Bromine-based flame retardants mainly employed at present include both those insoluble in solvents such as decabromodiphenyl oxide and those relatively soluble in solvents such as tetrabromobisphenol A. Therefore, two types of bromine-based flame retardants, that is, those easily dissolved in liquids in which thermoplastic resins are soluble and those not dissolved are present. Therefore, methods for processing vary according to the solubility of flame retardants.

The method for processing of the present invention shall be described in detail.

The method for processing thermoplastic resin compositions containing flame retardants according to the present invention comprises first a resin dissolution step to disperse a thermoplastic resin composition containing flame retardants in a solvent and to dissolve at least a part of thermoplastic resin. The thermoplastic resin compositions subjected to the method for processing of the present invention frequently contain various additives such as stabilizers and colorants, besides flame retardants and resin. These additives are precipitated in the resin dissolution step. Thus, the present method comprises, as a second step, a solid removing step to remove insoluble solids from the solution obtained in the resin dissolution step. As mentioned above, flame retardants are or are not separated and removed in the step according to the types of the flame retardants. Then, the thermoplastic resin can be separated by a resin precipitation step in which at least a part of the thermoplastic resin is precipitated from the resin dissolution liquid from which the insoluble solids have been removed.

When flame retardants are insoluble in a solvent for the resin dissolution step, a resin dissolution liquid employed in the resin precipitation step contains only resin components soluble in the solvent. In this case, the resin can be recovered by separating the resin from the solution with distillation under reduced pressure. In addition, since the solution employed can be recovered, it can be employed again in the dissolution step.

On the other hand, when flame retardants are soluble in a solvent for the resin dissolution step, the resin dissolution liquid employed in the resin precipitation step contains the resin and the flame retardants. In such cases, resin can be precipitated by addition of water or lower alcohols and separated from the flame retardants. As lower alcohols, methanol, ethanol, propanol, isopropanol, etc., can be mentioned.

Solvents employed in the resin dissolution step of the method for processing according to the present invention may be any solvents in which thermoplastic resins to be processed are generally soluble. For example, acetone, toluene, C₁₋₂ aliphatic halogenated hydrocarbons (for example, 1,2-dichloroethane, chloroform, dichloromethane, 1,1-dichloroethane, tetrachloroethane, trichloroethane, etc.), ethyl acetate, methyl acetate, and butyl acetate can be mentioned. Since bromine-based flame retardant, tetrabromobisphenol A is soluble in methanol as well as in the above solvents, the use of methanol in the resin precipitation step enables easy separation of theramoplastic resin and flame retardants.

Most of the solvents mentioned above have low flash points and require cautions in handling. Glycol ether compounds and fatty acid dialkyl ester compounds shown by the chemical formulas 3 and 4 and solvents mainly composed of d-limonen, l-limonen, or dipentene can be employed in the resin dissolution step. These solvents have excellent capacity to dissolve thermoplastic resins. 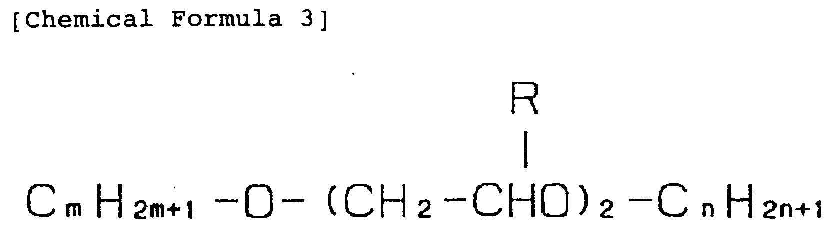 wherein, R is hydrogen or methyl group, m is an integer of 1 or more and 4 or less, and n is an integer of 0 or more and 4 or less; or the chemical formula 2:

R₁OOC- (CH₂)ₙ -COOR₂ [Chemical Formula 4]

wherein, R₁ and R₂ are alkyl groups having 1 or more and 3 or less carbon atoms, and n is an integer of 0 or more and 4 or less.

In addition, when glycol ether compounds shown by the chemical formula 3 are employed as a major component, the addition of water to a solution in which thermoplastic resin is dissolved results in precipitation of the thermoplastic resin in the solution. Then, after adherent water is removed by drying operation, thermoplastic resins are easily obtained. It is desirable to add 5-20 parts by weight per 100 parts by weight of the thermoplastic resin dissolution solution.

Solvent and thermoplastic resin can be separated by distillation of a solution in which thermoplastic resin is dissolved. The separated solvent can be employed again as a solvent employed in the method for processing according to the present invention, and the separated resin can be recycled as a raw material of thermoplastic resin again.

As glycol ether compounds shown by the chemical formula 3, diethylene glycol monoalkyl ether, dipropylene glycol monoalkyl ether, diethylene glycol dialkyl ether, dipropylene glycol dialkyl ether, etc., can be employed. As alkyl groups shown by CₘH₂ₘ₊₁ and CₙH₂ₙ₊₁, methyl group, ethyl group, propyl group, iso-propyl group, butyl group, iso-butyl group, and tert-butyl group are effective. Two alkyl groups in the dialkyl ethers may be the same or different. It is more desirable to use at least one selected from a group consisting of diethylene glycol dimethyl ether, diethylene glycol diethyl ether, and dipropylene glycol dimethyl ether as a major component.

Since solvents employed in the resin dissolution step in the method for processing according to the present invention can dissolve a larger amount of styrene polymer as concentrations of these glycol ether compounds become higher, it is desirable to elevate the concentrations of glycol ether compounds shown by the chemical formula 3 as far as possible. Meanwhile the concentration is preferable to be more than so called chemical reagent second class level.

Fatty acid dialkyl ester compounds shown by the chemical formula 4 are preferably dialkyl esters of oxalic acid, malonic acid, succinic acid, glutaric acid, and adipic acid in which alkyl groups shown by R1 and R2 are methyl group, ethyl group, propyl group, isopropyl group, butyl group, iso-butyl group, or tertbutyl group, and n representing the number of methylene groups is in the range of 0-4 (inclusive). Two alkyl groups in the dialkyl esters may be the same or different.

It is preferable to use at least one selected from fatty acid dimethyl ester compounds of the chemical formula 4 in which alkyl groups shown by R1 and R2 are methyl group, especially from a group consisting of dimethyl succinate, dimethyl glutarate, and dimethyl adipate as a major component.

Since solvents employed in the present invention can dissolve a larger amount of styrene polymers as concentrations of these fatty acid dialkyl ester compounds become higher, it is desirable to elevate the concentrations of fatty acid dialkyl ester compounds shown by the chemical formula 4 as far as possible. Meanwhile the concentration is preferable to be more than so called chemical reagent second class level.

The solvents employed in the resin dissolution step of the method for processing according to the present invention may be mainly composed of d-limonen, l-limonen, or dipentene. Since solvents employed in the present invention can dissolve a larger amount of styrene polymers as concentrations of these components become higher, it is desirable to elevate the concentrations of these compounds as far as possible. It is also possible to use a mixture of solvents shown by the chemical formulas 3 and 4, and d-limonen, l-limonen, and dipentene.

To solvents employed in the resin dissolution step of the method for processing according to the present invention, known additives in the forms of powder and solution can be added as required in the extent not largely damaging the dissolution capacity of the solvents. For example, antioxidants, antibacterial/antimycotic agents, insect repellers, colorants, blowing agents, surfactants, or agents to improve powder flowability can be optionally employed.

In the method for processing of thermoplastic resin compositions containing flame retardants of the present invention, the resin may be solid pieces obtained by coarse crushing or powder obtained by fine crushing to improve a dissolution rate of the resin in a solvent. In addition, in order to improve a dissolution rate of a solvent itself, warming and ultrasonic operations can be implemented.

As a result of the above operations, components insoluble in solvents remain in the solution. The remaining components are separated with filter treatment, supernatant treatment, centrifugation, and the like. The separated components can be employed as raw materials of various additives again after removing the adhesive solution by washing with water and drying. Substances insoluble in solvents such as pigments and glass fibers may remain mixed as far as they do not largely affect the separated components.

Thermoplastic resin dissolved can be easily recovered by distilling only solvents with distillation under normal or reduced pressure. Solvents obtained by distillation can be recycled as solvents for the present invention again. Thermoplastic resin remaining as residues after distillation can be reused for various products employing thermoplastic resin such as bodies of TV, monitors, and videos, after molding process again. Substances solved in a solvent such as dyes can remain mixed as far as they do not affect greatly the recycled resin.

In the method for processing of the present invention, since solvents with relatively high flash points are excellent in terms of safety, the method can be implemented at places where thermoplastic resin wastes appear, specifically in electric appliance stores and various factories.

### EXAMPLES

The method for processing thermoplastic resin compositions containing flame retardants according to the present invention are specifically described below.

### (Example 1)

In this Example, as a thermoplastic resin composition to be processed, a thermoplastic resin component comprising decabromodiphenyl oxide as a flame retardant component and polystyrene as a resin component was prepared in advance and the flame retardant contained in the resin composition was separated from the resin. The content of the flame retardant was adjusted to account for 5 parts by weight of the resin composition.

The resin composition to be processed was first subjected to coarse crushing to obtain blocks of about 5 mm x 5 mm in size. Then, the blocks were dispersed and dissolved in dipropylene glycol dimethyl ether. At the time of dissolution, 100 parts by weight of the solvent were employed per 20 parts by weight of the resin composition to be processed. After the solution was stirred sufficiently, it was left standing to precipitate the flame retardant.

After that, the supernatant of the solution in which polystyrene was dissolved was transferred to another container to separate the flame retardant in the resin composition to be processed as a residue precipitating from the solution. The solution remaining after the above operations, in which polystyrene was dissolved, was subjected to distillation operation under ordinary pressure and an atmosphere where oxygen was blocked by nitrogen purge with distillation apparatus temperature set at 200°C (a boiling point of dipropylene glycol dimethyl ether: 175°C) to separate dipropylene glycol dimethyl ether from polystyrene.

Dipropylene glycol ether thus obtained was employed for the same operations again and the same results were obtained. It was thus confirmed that the dipropylene glycol ether could be employed again as a dissolution solution for polystyrene. Weight average molecular weight was determined to know a property of the polystyrene thus separated. The results indicated that there was no significant difference in weight average molecular weight between prior to and following the experiment and confirmed that the recovered polystyrene could be employed as a raw material again.

### (Example 2)

In this example, as a thermoplastic resin composition to be processed, styrene resin containing 2 parts by weight of a flame retardant mainly composed of isopropylphenyldiphenyl phosphate was employed and the flame retardant contained in the resin was separated from the styrene resin.

First, the resin to be processed was finely crushed to obtain powder of 20 mesh or less. The powder was dissolved in dimethyl succinate. At the time of dissolution, 100 parts by weight of the solvent were employed per 5 parts by weight of the resin to be processed. Subsequently, after the solution was stirred sufficiently, it was left standing to precipitate the flame retardant. Then, the supernatant of the solution in which the styrene resin was dissolved was transferred to another container to separate the flame retardant in the resin composition to be processed as residue precipitating from the solution.

Then, the solution thus obtained in which the styrene resin was dissolved was subjected to distillation under reduced pressure while the pressure was reduced to 20 mmHg and the temperature of the distillation apparatus was set at 60°C to separate dimethyl succinate from the styrene resin.

### (Example 3)

In this example, as a thermoplastic resin to be processed, ABS resin containing 1 part by weight of a flame retardant mainly composed of decabromodiphenyl oxide was employed and the flame retardant contained in the resin was separated from the ABS resin.

First, the resin to be processed was finely crushed to obtain powder of 20 mesh or less. Then, the powder was dissolved in d-limonen. At the time of dissolution, 100 parts by weight of the solvent were employed per 20 parts by weight of the resin to be processed. Further, after the solution was stirred sufficiently, it was left standing to precipitate the flame retardant.

Then, the supernatant of the solution in which the ABS resin was dissolved was transferred to another container to separate the flame retardant in the resin composition to be processed as residue precipitating from the solution. Then, the solution remaining after the above operations in which the ABS resin was dissolved was subjected to distillation under ordinary pressure and atmosphere where oxygen was blocked by nitrogen purge with distillation apparatus temperature set at 200°C (a boiling point of d-limonen: 175°C) to separate d-limonen from the ABS resin.

The d-limonen thus obtained was employed again for the same operations and the same results were obtained. Thus, it was confirmed that the d-limonen could be employed as a dissolution solution for ABS resin again. The degree of degradation of the ABS resin thus separated was examined according to the changes in weight average molecular weight. As a result, no significant difference was observed in weight average molecular weight between prior to and following the experiment. It was thus confirmed that the resin could be employed as a raw material for ABS resin.

### (Example 4)

In this example, as a thermoplastic resin composition to be processed, a thermoplastic resin composition comprising decabromodiphenyl oxide as a flame retardant component and polystyrene as a resin component was prepared in advance and the flame retardant contained in the resin composition was separated from the resin. At the time, the content of the flame retardant was adjusted to account for 5 parts by weight of the resin composition.

The resin composition to be processed was first subjected to coarse crushing to obtain blocks of about 5 mm x 5 mm in size. Then, the blocks were dispersed and dissolved in dimethyl succinate. At the time of dissolution, 100 parts by weight of the solvent were employed per 10 parts by weight of the resin composition to be processed. After this solution was stirred sufficiently, it was left standing to precipitate the flame retardant.

After that, the supernatant of the solution in which the polystyrene was dissolved was transferred to another container and the flame retardant in the resin composition to be processed was separated as residue precipitating from the solution. The solution remaining after the above operations in which polystyrene was dissolved was subjected to distillation treatment under reduced pressure of 20 mmHg with distillation apparatus temperature set at 60°C to separate dimethyl succinate from polystyrene.

Dimethyl succinate thus obtained was employed for the same operations again and the same results were obtained. It was thus confirmed that the dimethyl succinate could be employed again as a dissolution solution for polystyrene. Weight average molecular weight was determined to know a property of the polystyrene thus separated. The results indicated that there was no significant difference in weight average molecular weight between prior to and following the experiment and confirmed that recovered polystyrene could be employed as a raw material again.

### (Example 5)

In this example, as a thermoplastic resin composition to be processed, a thermoplastic resin composition comprising decabromodiphenyl oxide as a flame retardant and polystyrene as a resin component was prepared in advance and the flame retardant contained in the resin composition was separated from the reins. The content of the flame retardant was adjusted to account for 5 parts by weight of the resin composition.

First, the resin composition to be processed was finely crushed to obtain powder of 50 mesh or less. Then, the powder was dispersed and dissolved in dipropylene glycol dimethyl ether. At the time of dissolution, 100 parts by weight of the solvent were employed per 20 parts by weight of the resin composition to be processed. After the solution was stirred sufficiently, it was left standing to precipitate the retardant.

After that, the supernatant of the solution in which the polystyrene was dissolved was transferred to another container to separate the flame retardant in the resin composition to be processed as residue precipitating from the solution.

Then, 10 parts by weight of water were added to 100 parts by weight of the supernatant to reprecipitate polystyrene as a gel substance. The gel polystyrene thus obtained was scooped, washed with water, and left in a dry kiln at 100°C until sufficiently dried. In the above method, the time required to dry 100 g of the styrene resin was 10 minutes or less. The weight average molecular weight of the styrene resin thus obtained was 99% of the weight average molecular weight of polystyrene before dissolution. No degradation of the resin was confirmed. Thus, it was confirmed that recycled polystyrene was in the same condition as before recycling.

### (Example 6)

In this example, as a thermoplastic resin composition to be processed, high-impact polystyrene (abbreviated as HIPS hereinbelow) waste containing about 10 parts by weight of decabromodiphenyl oxide as a flame retardant, which had been employed as a back cover for television and was subjected to coarse crushing into blocks of about 5 mm x 5 mm in size, was prepared.

The thermoplastic resin composition was dispersed and dissolved in chloroform. At the time of dissolution, 100 parts by weight of the solvent were employed per 10 parts by weight of the resin composition to be processed. After the solution was stirred sufficiently, it was left standing to precipitate the flame retardant.

After that, the supernatant of the solution in which a part of HIPS was dissolved was transferred to another container to separate the flame retardant and other insoluble substances in the resin composition to be processed as residue precipitating from the solution.

Methanol was added to the chloroform solution in which a part of HIPS was dissolved to precipitate the resin component. The resin component thus precipitated was scooped, washed thoroughly with methanol, and left in a dry kiln at 100°C until sufficiently dried. The results of infra-red absorption spectrometry of the resin component showed that the resin component was polystyrene. It was also confirmed that the resin component contained no flame retardant. Chloroform was separated from methanol by distillation.

### (Example 7)

In this example, as a thermoplastic resin composition to be processed, a thermoplastic resin composition comprising tetrabromobisphenol A as a flame retardant and polystyrene as a resin component was prepared in advance and the flame retardant contained in the resin composition was separated from the resin. The content of the flame retardant was adjusted to account for 3 parts by weight of the resin composition.

First, the resin composition to be processed was finely crushed to obtain powder of 100 mesh or less. Then, the powder was dispersed and dissolved in toluene. At the time of dissolution, 100 parts by weight of the solvent were employed per 5 parts by weight of the resin composition to be processed. After the solution was stirred sufficiently, no precipitate was observed.

Methanol was added to the solution in which polystyrene and the flame retardant were dissolved to precipitate polystyrene. As a result of separation of toluene, methanol, and the flame retardant with distillation under reduced pressure, the flame retardant was taken out so that the flame retardant was separated from the styrene resin.

The use of the method for processing according to the present invention enables easy separation of thermoplastic resin compositions containing a flame retardant, which are anticipated to be discarded in a large amount and to cause a problem in the future, into flame retardants and thermoplastic resin. In addition, since a reduction in waste can be attained through recycling flame retardants and thermoplastic resins and solvents employed for recycling are reusable, the present invention is helpful in solving environmental problems that has been required recently.

## Claims

1. A method for processing thermoplastic resin compositions containing flame retardants comprising:
a resin dissolution step to disperse the thermoplastic resin composition containing flame retardants in a solvent and dissolve at least a part of the thermoplastic resin composition;
a flame retardant removing step to remove at least a part of the flame retardants from the solution in which the resin has been dissolved; and
a resin removing step to remove at least a part of the thermoplastic resin from the solution from which the flame retardants have been removed.

2. A method for processing thermoplastic resin compositions containing flame retardants comprising:
a resin dissolution step to disperse the thermoplastic resin composition containing flame retardants in a solvent and dissolve at least a part of the thermoplastic resin composition;
a resin removing step to remove at least a part of the thermoplastic resin composition from the solution in which the resin has been dissolved; and
a flame retardant removing step to remove at least a part of the flame retardants from the solution from which the resin has been removed.

3. The method for processing thermoplastic resin composition containing flame retardants according to claim 1 or 2, wherein the resin removing step comprises a step of distillation under reduced pressure.

4. The method for processing thermoplastic resin composition containing flame retardants according to Claim 1 or 2, wherein the resin removing step comprises a step of adding water or lower alcohols.

5. The method for processing thermoplastic resin composition containing flame retardants according to any one of claims 1-4, wherein said flame retardants are bromine-based flame retardants.

6. The method for processing thermoplastic resin composition containing flame retardants according to any one of claims 1-5, wherein said thermoplastic resins are styrene polymers.

7. The method for processing thermoplastic resin composition containing flame retardants according to any one of claims 1-6, wherein said solvents are represented by the chemical formula 1: 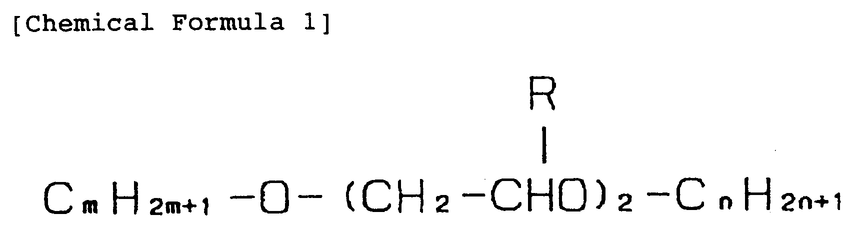 wherein, R is hydrogen or methyl group, m is an integer of 1 or more and 4 or less, and n is an integer of 0 or more and 4 or less; or the chemical formula 2:
R₁OOC- (CH₂)ₙ -COOR₂ [Chemical Formula 2]
wherein, R₁ and R₂ are alkyl groups having 1 or more and 3 or less carbon atoms, and n is an integer of 0 or more and 4 or less.

8. The method for processing thermoplastic resin composition containing flame retardants according to any one of claims 1-6, wherein said solvents contain at least one selected from a group consisting of d-limonen, l-limonen, and
dipentene.
